# EUROPÄISCHE PATENTSCHRIFT

(11) **EP 1 058 639 B1**
(45) Veröffentlichungstag und Bekanntmachung des Hinweises auf die Patenterteilung: **29.08.2001**
(21) Anmeldenummer: 99907566.6
(22) Anmeldetag: 25.02.1999
(51) Int. Cl.: B62D 5/083

(54) **DREHSCHIEBERVENTIL FÜR HILFSKRAFTLENKUNGEN VON KRAFTFAHRZEUGEN**
ROTARY DISK VALVE FOR POWER STEERING SYSTEMS OF MOTOR VEHICLES
VANNE DE DISTRIBUTION ROTATIVE DESTINEE A DES DIRECTIONS ASSISTEES DE VEHICULES

(30) Priorität: 03.03.1998 DE 19808796
(43) Veröffentlichungstag der Anmeldung: 13.12.2000
(73) Patentinhaber: ZF Lenksysteme GmbH, 73527 Schwäbisch Gmünd (DE)
(72) Erfinder: HAFERMALZ, Jens-Uwe, D-73550 Waldstetten (DE); ERTLE, Peter, D-73568 Durlangen (DE); URBAN, Karl-Heinz, D-73565 Spraitbach (DE); DE MAIGHT, Winfried, D-73557 Mutlangen (DE)
(86) Internationale Anmeldenummer: EP9901228
(87) Internationale Veröffentlichungsnummer: WO9944877

(56) Entgegenhaltungen:
- EP-A- 0 800 981
- EP-A- 0 819 597
- GB-A- 2 092 080

## Beschreibung

Die Erfindung betrifft ein Drehschieberventil für Hilfskraftlenkungen von Kraftfahrzeugen nach der im Oberbegriff von Anspruch 1 näher definierten Art.

Das Drehschieberventil enthält zwei Ventilelemente, die koaxial ineinander beweglich angeordnet und zum Erzielen eines Steuerweges begrenzt zueinander verdrehbar angeordnet sind.
Dabei ist das erste Ventilelement, das mit dem Ventil-Eingangsglied verbunden ist, als radial innenliegender Drehschieber ausgebildet. Das zweite Ventilelement ist mit dem Ventil-Ausgangsglied drehfest verbunden und als radial auβenliegende Steuerbuchse ausgebildet.-Der Drehschieber ist zusätzlich über eine den Steuerweg begrenzende Totgangkupplung mit einem Antriebsritzel verbunden. Ein in dem Antriebsritzel spielfrei eingepresster Stift greift zur Drehmitnahme in die Steuerbuchse ein.
Beide Ventilelemente weisen Steuerlängsnuten auf, die wenigstens zu einem Teil in ihrer axialen Erstreckung begrenzt sind und zur Steuerung eines Druckmittels von oder zu einem der zwei Arbeitsräume eines Servomotors dienen. Zur Rückstellung der beiden Ventilelemente aus einer ausgelenkten Stellung in ihre Neutralstellung dient eine Drehstabfeder.

Ein solches Drehschieberventil ist beispielsweise bekannt aus dem US-Patent 37 46 045. Dieses Drehschieberventil enthält einen Drehschieber, der in einer Axialbohrung einer Steuerbuchse geführt ist. Der Drehschieber ist mit einem Ventil-Ausgangsglied über einen Torsionsstab und eine Totgangkupplung verbunden. Diese Totgangkupplung begrenzt die relative Verdrehung der beiden Ventilelemente zueinander und schafft einen mechanischen Anschlag des Ventiles nach Aufbrauch des Verdrehweges der Totgangkupplung. Über diesen mechanischen Anschlag muß bei einem Ausfall der hydraulischen Unterstützung die gesamte mechanische Lenkkraft übertragen können.
Ein weiteres Drehschieberventil ist bekannt aus der DE-41 08 597 A1. Dieses Drehschieberventil zeichnet sich dadurch aus, daß, um den Verschleiß des in das Antriebsritzel eingepressten Stifts zu reduzieren, bei der Montage des Drehschieberventils die Mittelachse des inneren Durchmessers der Steuerbuchse die Mittelachse des Stiftloches schneidet und die Mittelachse des inneren Durchmessers der Steuerbuchse von der Mittelachse der Ventilzusammenbaugruppe in Richtung der Seite der Ventilzusammenbaugruppe verschoben ist, die dem Stiftloch gegenüber liegt.

Die Steuerbuchse wird auch in dem bekannten Drehschieberventil bei der Montage mit dem in das Antriebsritzel eingepressten Stift verbunden. Um diesen Montageschritt zu ermöglichen, muß die Verbindung von Steuerbuchse und Stift ein Spiel aufweisen.
Durch das vorhandene Spiel zwischen Steuerbuchse und Stift kann es zu einer Relativbewegung zwischen dem Drehschieber und der Steuerbuchse ohne ein vom Lenkhandrad eingeleitetes, spürbares Lenkmoment kommen. Dies hat unerwünschte Ölströme zum Arbeitszylinder zur Folge. Zusätzlich macht sich das Spiel am Lenkhandrad durch Momentensprünge negativ bemerkbar. Diese auftretenden Lenkmomentsprünge werden als Selbstlenkeffekte am Lenkhandrad wahrgenommen und führen zu einem Unsicherheitsgefühl des Fahrers.

Der vorliegenden Erfindung liegt die Aufgabe zugrunde, ein spielfreies Drehschieberventil darzustellen, das die negativen Auswirkungen der montagebedingten Toleranzen auf das Lenkverhalten ausgleichen kann.

Diese Aufgabe wird durch ein, auch die kennzeichnenden Merkmale des Hauptanspruchs aufweisendes, gattungsgemäßes Drehschieberventil gelöst.

Die erfindungsgemäße Lösung läßt sich in zumindest drei konstruktiven Varianten realisieren. Bei einer ersten Konstruktionsvariante erfolgt der Ausgleich des für die Montage benötigten Spiels durch die Verwendung eines geschlitzten, radial federnden Stiftes. Die zweite konstruktive Variante sieht eine geschlitzte Rohrbuchse zum Toleranzausgleich vor und die dritte Alternative realisiert die spielfreie Verbindung durch eine geschlitzte Aufnahmebohrung in der Steuerbuchse.

Vorteilhafte und zweckmäßige Ausgestaltungen der Erfindung sind in den Unteransprüchen angegeben.

Nachfolgend sind anhand der Zeichnungen verschiedene Ausführungsbeispiele der vorliegenden Erfindung prinzipgemäß beschrieben.

**Es zeigen:**
- Fig. 1: ein erstes Ausführungsbeispiel eines Drehschieberventils mit geschlitztem Mitnahmestift;
- Fig. 1A: eine vergrößerte Darstellung des Bereichs der Mitnahmeverbindung mit geschlitztem Mitnahmestift;
- Fig. 1B: eine Draufsicht des in Fig. 1A dargestellten Bereichs der Mitnahmeverbindung mit geschlitztem Mitnahmestift;
- Fig. 2: ein zweites Ausführungsbeispiel eines Drehschieberventils mit einer geschlitzten Rohrbuchse als Verbindungsglied zwischen Antriebsritzel und Steuerbuchse;
- Fig. 2A: eine vergrößerte Darstellung des Bereichs der Mitnahmeverbindung mit geschlitzter Rohrbuchse;
- Fig. 2B: eine Draufsicht des in Fig. 2A dargestellten Bereichs der Mitnahmeverbindung mit geschlitzter Rohrbuchse;
- Fig. 3: ein weiteres Ausführungsbeispiel eines Drehschieberventils mit toleranzausgleichender Aufnahmebohrung in der Steuerbuchse;
- Fig. 3A: eine vergrößerte Darstellung des Bereichs der Mitnahmeverbindung mit toleranzausgleichender Aufnahmebohrung in der Steuerbuchse und
- Fig. 3B: eine Draufsicht des in Fig. 3A dargestellten Bereichs der Mitnahmeverbindung mit toleranzausgeichender Aufnahmebohrung in der Steuerbuchse.

Das erfindungsgemäße Drehschieberventil 1 enthält ein erstes Ventilelement in der Form eines Drehschiebers 2 und ein zweites Ventilelement, das als Steuerbuchse 3 ausgebildet ist.
Der Drehschieber 2 ist mit einem Ventil-Eingangsglied 4 drehfest verbunden, welches als Lenkspindelanschluß ausgebildet ist. Der Lenkspindelanschluß ist beispielsweise mit einer nicht dargestellten Lenkspindel, die ein Lenkhandrad trägt, über ein ebenfalls nicht dargestelltes Kreuzgelenk verbunden. Der Drehschieber 2 ist außerdem über eine nicht dargestellte Totgangkupplung mit dem Ventil-Ausgangsglied 5 verbunden.
Das Ventil-Ausgangsglied 5 kann als Antriebsritzel oder als Kugelgewindespindel ausgebildet sein, abhängig von der Verwendung bei Zahnstangen- oder Kugelmutter-Hilfskraftlenkungen.

An der äußeren Mantelfläche des Drehschiebers 2 sind Steuerlängsnuten 6 angeordnet, die mit den Steuerlängsnuten 7 der Steuerbuchse 3 zusammenwirken. Das Drehschieberventil 1 stellt, je nach Drehrichtung, eine Druckmittelverbindung über die Steuerlängsnuten 6 und 7 sowie über Ringnuten 8 in der Steuerbuchse 3 zu einem nicht dargestellten Servomotor dar.
Das Ventil-Eingansglied 4 ist zudem über eine Drehstabfeder 9 mit dem Ventil-Ausgangsglied 5 verbunden. Das Ventil-Ausgangsglied 5 seinerseits ist über eine Mitnahmeverbindung 10 drehfest mit der Steuerbuchse 3 verbunden.
Durch diese verschiedenen Verbindungen ist eine begrenzte, relative Verdrehung des Drehschiebers 2 zur Steuerbuchse 3 möglich. Durch die Verdrehung der beiden Ventilelemente relativ zueinander wird das von einer nicht dargestellten Servopumpe geförderte Druckmittel über einen ebenfalls nicht dargestellten Druckmittelbehälter von dem entlasteten. in den belasteten Arbeitsraum des Servomotors geleitet.

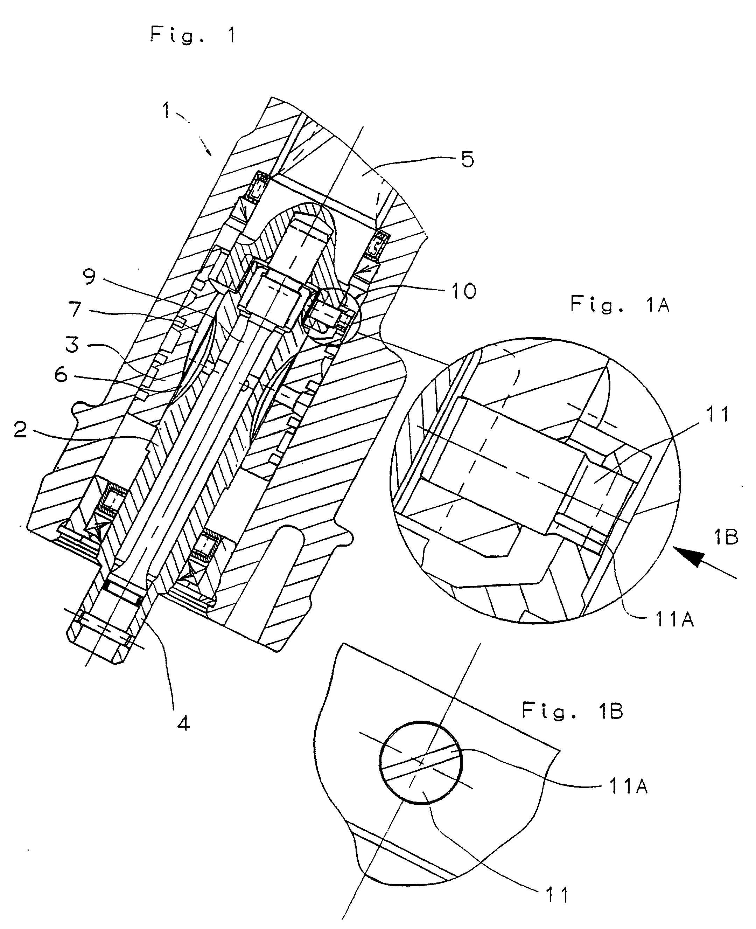

Die Mitnahmeverbindung 10 zwischen der Steuerbuchse 3 und dem Ventil-Ausgangsglied 5 wird in Fig. 1 durch einen radial federnden Mitnahmestift 11 realisiert, der ein Übermaß gegenüber der Bohrung in der Steuerbuchse 3 aufweist und somit die zum Montieren der Steuerbuchse 3 benötigte Spielpassung zu einer spielfreien Verbindung verändert. Der radial federnde Mitnahmestift 11 wird bei der Montage verformt und klemmt somit die Steuerbuchse 3. Die im Mitnahmebereich des radial federnden Mitnahmestifts 11 entstehende Federkraft ist größer als die auf die Steuerbuchse 3 wirkenden Kräfte, so daß keine Relativbewegung zwischen den beiden Ventilteilen entstehen kann. Diese Ausführung der Mitnahmeverbindung 10 kann durch die Anordnung eines Schlitzes in einem Mitnahmestift eines bekannten Drehschieberventils 1 erreicht werden.

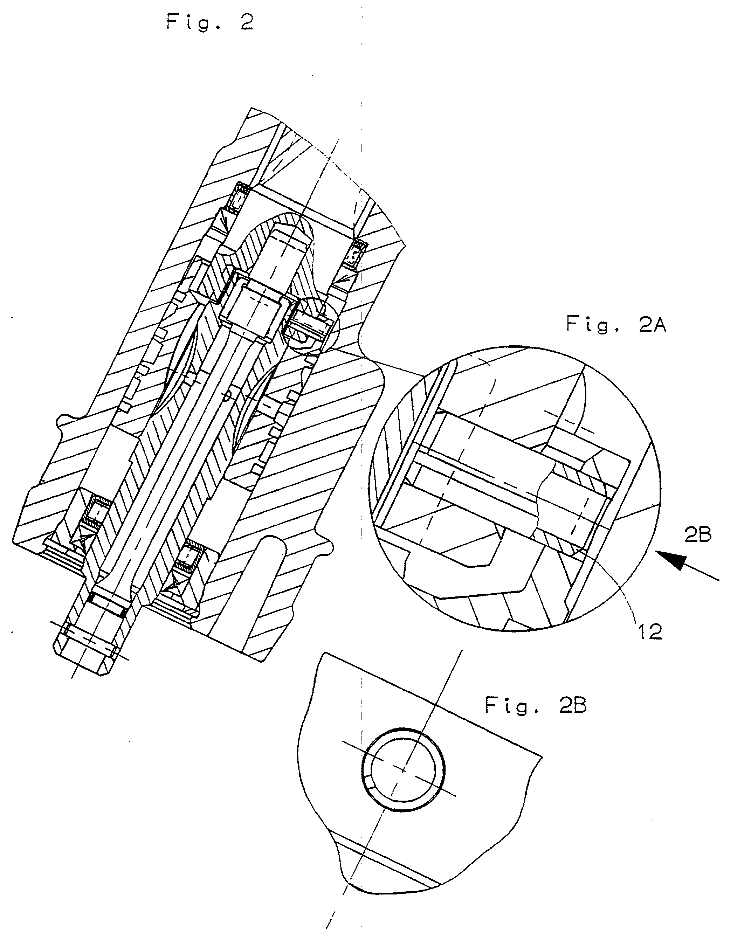

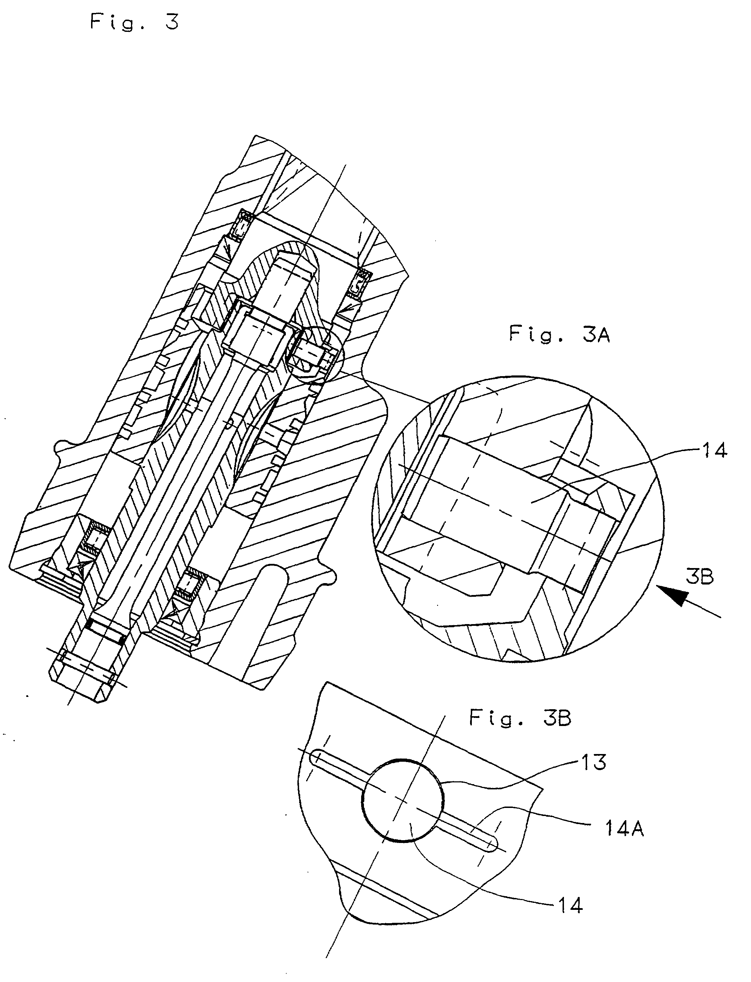

Die Ausführungsbeispiele der Fig. 2 und 3 entsprechen weitestgehend dem Ausführungsbeispiel nach Fig. 1. Lediglich im Bereich der Mitnahmeverbindung 10 bestehen Unterschiede. In dem Ausführungsbeispiel nach Fig. 2 wird die Relativbewegung zwischen den beiden Ventilteilen durch eine als geschlitzte Rohrbuchse 12 verwirklichte Mitnahmeverbindung 10 verhindert.
Bei der Ausführung mit der geschlitzten Rohrbuchse 12 kann die Federwirkung für das Einpressen in das Ventil-Ausgangsglied 5 und in die Mitnahmebohrung der Steuerbuchse 3 genutzt werden.

Denselben Effekt erreicht man durch eine toleranzausgleichende Aufnahmebohrung 13 in der Steuerbuchse 3. Infolgedessen kann ein massiver Mitnahmestift 14 eines bekannten Drehschieberventils 1 verwendet werden.
Die Aufnahmebohrung 13 der Steuerbuchse 3 wird mit zumindest-einem Schlitz versehen, was eine elastische Aufweitung bei der Montage ermöglicht.

In den bisher beschriebenen Ausführungsbeispielen ist der Drehschieber 2 fest mit dem Ventil-Eingangsglied 4 und die Steuerbuchse 3 mit dem Ventil-Ausgangsglied 5 verbunden.
Es gibt aber auch Drehschieberventile, die mit umgekehrt zugeordneten Ventilelementen arbeiten. Für diese Drehschieberventile kann die Erfindung ebenfalls, mit den gleichen Vorteilen, verwendet werden.

### Bezugszeichen

- 1: Drehschieberventil
- 2: Drehschieber
- 3: Steuerbuchse
- 4: Ventil-Eingangsglied
- 5: Ventil-Ausgangsglied
- 6: Steuerlängsnuten (Drehschieber)
- 7: Steuerlängsnuten (Steuerbuchse)
- 8: Ringnuten (Steuerbuchse)
- 9: Drehstabfeder
- 10: Mitnahmeverbindung
- 11: radial federnder Mitnahmestift
- 11A: toleranzausgleichender Schlitz des Mitnahmestifts
- 12: geschlitzte Rohrbuchse
- 13: toleranzausgleichende Aufnahmebohrung
- 13A: toleranzausgleichender Schlitz in der Steuerbuchse
- 14: massiver Mitnahmestift

## Patentansprüche

1. Drehschieberventil (1) für Hilfskraftlenkungen von Kraftfahrzeugen, mit einem ersten Ventilelement, das mit einem Ventil-Eingangsglied (4) drehfest verbunden ist, mit einem zweiten Ventilelement, das mit einem Ventil-Ausgangsglied (5) über eine Mitnahmeverbindung (10) drehfest verbunden ist,
- wobei das erste Ventilelement mit dem Ventil-Ausgangsglied (5) über eine Drehstabfeder (9) und über eine Totgangkupplung verbunden ist,
- die beiden Ventilelemente in einem Ventilgehäuse koaxial ineinander beweglich angeordnet sind und maximal um den Verdrehweg der Totgangkupplung relativ zueinander verdrehbar sind und
- das radial außenliegende Ventilelement innenliegende und das radial innenliegende Ventilelement außenliegende, wenigstens teilweise in ihrer axialen Länge begrenzte Steuer-Längsnuten (6, 7) aufweisen, die miteinander zur Steuerung eines Druckmittels zu und von zwei Arbeitsräumen eines Servomotors zusammenwirken,
**dadurch gekennzeichnet, daß** die Mitnahmeverbindung (10) durch federnde Elemente spielfrei ausgebildet ist.

2. Drehschieberventil nach Anspruch 1, **dadurch gekennzeichnet, daß** die spielfreie Mitnahmeverbindung (10) durch einen radial federnden Mitnahmestift (11) erfolgt.

3. Drehschieberventil nach Anspruch 2, **dadurch gekennzeichnet,daß** der radial federnde Mitnahmestift (11) zumindest einen Schlitz und im Mitnahmebereich eine Durchmesservergrößerung aufweist.

4. Drehschieberventil nach Anspruch 1, **dadurch gekennzeichnet, daß** die Spielfreiheit der Mitnahmeverbindung (10) durch eine geschlitzte Rohrbuchse (12) gewährleistet wird.

5. Drehschieberventil nach Anspruch 1, **dadurch gekennzeichnet, daß** der Spielausgleich der Mitnahmeverbindung (10) durch eine toleranzausgleichende Aufnahmebohrung (13) in der Steuerbuchse (3) erfolgt.

6. Drehschieberventil nach Anspruch 5, **dadurch gekennzeichnet, daß** die toleranzausgleichende Aufnahmebohrung (13) zumindest einen Schlitz aufweist.

## Claims

1. Rotary slide valve (1) for power steering systems of motor vehicles, with a first valve element which is connected fixedly in terms of rotation to a valve inlet member (4), and with a second valve element which is connected fixedly in terms of rotation to a valve outlet member (5) via a take-up connection (10),
- the first valve element being connected to the valve outlet member (5) via a torsion-bar spring (9) and via a backlash coupling,
- the two valve elements being moveably arranged coaxially one in the other in a valve housing and being rotatable relative to one another at most by the amount of the rotary travel of the backlash coupling, and
- the radially outer valve element having inner and the radially inner valve element outer longitudinal control grooves (6, 7) which are limited at least partially in their axial length and which cooperate with one another in order to control a pressure medium to and from two working spaces of a servomotor,
**characterized in that** the take-up connection (10) is formed, free of play, by resilient elements.

2. Rotary slide valve according to Claim 1,
**characterized in that** the play-free take-up connection (10) takes place by means of a radially resilient take-up pin (11).

3. Rotary slide valve according to Claim 2,
**characterized in that** the radially resilient take-up pin (11) has at least one slot and, in the take-up region, an increase in diameter.

4. Rotary slide valve according to Claim 1,
**characterized in that** the freedom from play of the take-up connection (10) is ensured by a slotted tubular bush (12).

5. Rotary slide valve according to Claim 1,
**characterized in that** the compensation of play of the take-up connection (10) is carried out by means of a tolerance-compensating receiving bore (13) in the control bush (3).

6. Rotary slide valve according to Claim 5,
**characterized in that** the tolerance-compensating receiving bore (13) has at least one slot.

## Revendications

1. Vanne de distribution rotative (1) pour directions assistées de véhicules, comprenant un premier élément de vanne qui est connecté fixe en rotation à un organe d'entrée de vanne (4), comprenant un deuxième élément de vanne qui est connecté fixe en rotation à un organe de sortie de vanne (5) par le biais d'une connexion à entraînement (10),
- le premier élément de vanne étant connecté à l'organe de sortie de vanne (5) par le biais d'un ressort à barre de torsion (9) et par le biais d'un accouplement à course morte,
- les deux éléments de vanne étant disposés dans un carter de vanne de manière déplaçable coaxialement l'un dans l'autre et pouvant être décalés relativement l'un par rapport à l'autre au maximum de la course de décalage de l'accouplement à course morte et
- l'élément de vanne radialement extérieur et l'élément de vanne radialement intérieur présentent des rainures longitudinales de commande respectivement intérieures et extérieures (6, 7), au moins partiellement limitées dans leur longueur axiale, qui coopèrent les unes avec les autres pour la commande d'un fluide de pression vers et depuis deux chambres de travail d'un servomoteur,
**caractérisée en ce que** la connexion d'entraînement (10) est réalisée sans jeu par des éléments élastiques.

2. Vanne de distribution rotative selon la revendication 1, **caractérisée en ce que** la connexion d'entraînement sans jeu (10) s'effectue par une tige d'entraînement (11) radialement élastique.

3. Vanne de distribution rotative selon la revendication 2, **caractérisée en ce que** la tige d'entraînement (11) radialement élastique présente au moins une fente et, dans la partie d'entraînement, un élargissement de diamètre.

4. Vanne de distribution rotative selon la revendication 1, **caractérisée en ce que** l'absence de jeu de la connexion d'entraînement (10) est assurés par un manchon tubulaire fendu (12).

5. Vanne de distribution rotative selon la revendication 1, **caractérisée en ce que** la compensation du jeu de la connexion d'entraînement (10) est réalisée par un alésage récepteur (13) de compensation des tolérances dans 1e manchon de commande (3).

6. Vanne de distribution rotative selon la revendication 5, **caractérisée en ce que** l'alésage récepteur (13) de compensation des tolérances présente au moins une fente.
